# EUROPÄISCHE PATENTSCHRIFT

(11) **EP 1 016 497 B1**
(45) Veröffentlichungstag und Bekanntmachung des Hinweises auf die Patenterteilung: **21.07.2004**
(21) Anmeldenummer: 99124804.8
(22) Anmeldetag: 13.12.1999
(51) Int. Cl.: B23Q 3/157

(54) **Werkzeugmaschine**
Machine tool
Machine-outil

(30) Priorität: 28.12.1998 DE 19860492
(43) Veröffentlichungstag der Anmeldung: 05.07.2000
(73) Patentinhaber: DECKEL MAHO Pfronten GmbH, D-87459 Pfronten (DE)
(72) Erfinder: Hoppe, Gerd, 34317 Habichtswald (DE)
(74) Vertreter: Beetz & Partner Patentanwälte

(56) Entgegenhaltungen:
- EP-A- 0 516 597
- JP-A- 8 039 382

## Beschreibung

Die Erfindung betrifft eine Werkzeugmaschine mit einer Bearbeitungsspindel, einer Vorrichtung zur Einwechslung eines Zusatzaggregats in die Bearbeitungsspindel, einem Werkzeugmagazin für die Bereitstellung mehrerer Werkzeuge und einem Werkzeugwechsler, der für den Werkzeugtransport zwischen dem Werkzeugmagazin und der Bearbeitungsspindel mindestens einen Werkzeuggreifer zur Halterung von Werkzeugen für die Bearbeitungsspindel enthält.

Bei bekannten Werkzeugmaschinen der eingangs genannten Art wird als Zusatzaggregat z.B. eine Hochgeschwindigkeitsspindel oder ein Polierkopf eingesetzt, die bei Bedarf in die Bearbeitungsspindel einwechselbar sind. Dadurch kann der Drehzahlbereich für bestimmte Bearbeitungsoperationen erhöht und das Einsatzgebiet der Werkzeugmaschine erweitert werden. Für die Hochgeschwindigkeitsspindeln oder andere Zusatzaggregate werden allerdings in der Regel andere Werkzeugaufnahmen als für die Bearbeitungsspindel benötigt. Bei herkömmlichen Werkzeugmaschinen erfolgt der Werkzeugwechsel an den Zusatzaggregaten daher vielfach von Hand oder durch gesonderte Wechseleinrichtungen. Dies ist entweder zeitaufwendig oder mit einem erhöhten konstruktiven und steuerungstechnischen Aufwand verbunden.

Aufgabe der Erfindung ist es, eine Werkzeugmaschine der eingangs genannten Art zu schaffen, die auf einfache und schnelle Weise eine vollautomatische Versorgung sowohl der Bearbeitungsspindel als auch eines in die Bearbeitungsspindel einwechselbaren Zusatzaggregats mit den jeweils benötigten Werkzeugen ermöglicht.

Diese Aufgabe wird durch eine Werkzeugmaschine mit den Merkmalen des Anspruchs 1 gelöst.

Zweckmäßige Ausführungsformen der Erfindung sind in den Unteransprüchen angegeben.

Der wesentliche Vorteil der erfindungsgemäßen Werkzeugmaschine besteht darin, daß nicht nur unterschiedliche Werkzeuge für die Bearbeitungsspindel, sondern auch mehrere Werkzeuge für ein in die Bearbeitungsspindel eingewechseltes Zusatzaggregat zur Bearbeitung bereitgestellt und durch einen gemeinsamen Werkzeugwechsler automatisch eingewechselt werden können. Für die automatische Einwechslung der Werkzeuge am Zusatzaggregat sind keine aufwendigen zusätzlichen Antriebs- und Steuerungselemente erforderlich. Dadurch kann eine vollautomatisierte Komplettbearbeitung ohne manuelle Eingriffe durchgeführt werden.

Der Werkzeugwechsler enthält eine Vierfach-Greiferanordnung mit zwei diametral gegenüberliegenden Werkzeuggreifern zur Halterung von Werkzeugen für die Bearbeitungsspindel und zwei um jeweils 90° dazu versetzten zusätzlichen Werkzeugreifern zur Halterung von Werkzeugen für das Zusatzaggregat. Durch eine einfache Verdrehung der Vierfach-Greiferanordnung um 90° ist der Werkzeugwechlser so entweder als Doppelgreifer zur Versorgung der Bearbeitungsspindel oder als Doppelgreifer zur Versorgung des Zusatzaggregats verwendbar. Durch die jeweils gegenüberliegenden Greiferpaare kann an der Bearbeitungsspindel durch Drehung der Greiferanordnung um 180° ein zuvor im Werkzeugmagazin entnommenes neues Werkzeug gegen ein zuvor verwendetes Werkzeug ausgetauscht werden. Dadurch wird mit einem geringen Steuerungsaufwand ein schneller Werkzeugwechsel sowohl an der Bearbeitungsspindel als auch an dem in die Bearbeitungsspindel eingesetzten Zusatzaggregat ermöglicht.

Das Zusatzaggregat kann z.B. eine Hochgeschwindigkeitsspindel, ein Polierkopf oder ein weiteres Anbaugerät sein, durch die der Einsatzbereich der Werkzeugmaschine erweitert werden kann.

Die Werkzeuge sind im allgemeinen in speziellen Werkzeugaufnahmen mit entsprechenden Spannkegeln gehaltert. Da die Werkzeugaufnahmen für die Bearbeitungsspindel in der Regel größer sind als die der Werkzeuge für das Zusatzaggregat, weisen auch die entsprechenden Werkzeuggreifer für die jeweiligen Werkzeugaufnahmen eine unterschiedliche Größe auf.

In einer konstruktiv einfachen Ausführung ist der Werkzeuggreifer auf einem mittels Linearantrieb an einem Gestell des Werkzeugmagazins horizontal verfahrbaren Träger um eine Vertikalachse motorisch verdrehbar angeordnet. Die horizontale Verschiebung des Trägers und die Drehung des Werkzeuggreifers kann über elektrische, hydraulische oder pneumatische Stellantriebe erfolgen.

Weitere Besonderheiten und Vorzüge der Erfindung ergeben sich aus der folgenden Beschreibung vorteilhafter Ausführungsbeispiele anhand der Zeichnung. Es zeigen:
- Fig. 1:: eine schematische Darstellung einer erfindungsgemäßen Werkzeugmaschine;
- Fig. 2:: eine schematische Seitenansicht eines Teils des Werkzeugmagazins mit einem Werkzeugwechsler an der Werkzeugmaschine von Fig. 1;
- Fig. 3:: eine schematische Seitenansicht des Werkzeugwechslers von Fig. 2; und
- Fig. 4:: eine schematische Draufsicht des Werkzeugwechslers von Fig. 3.

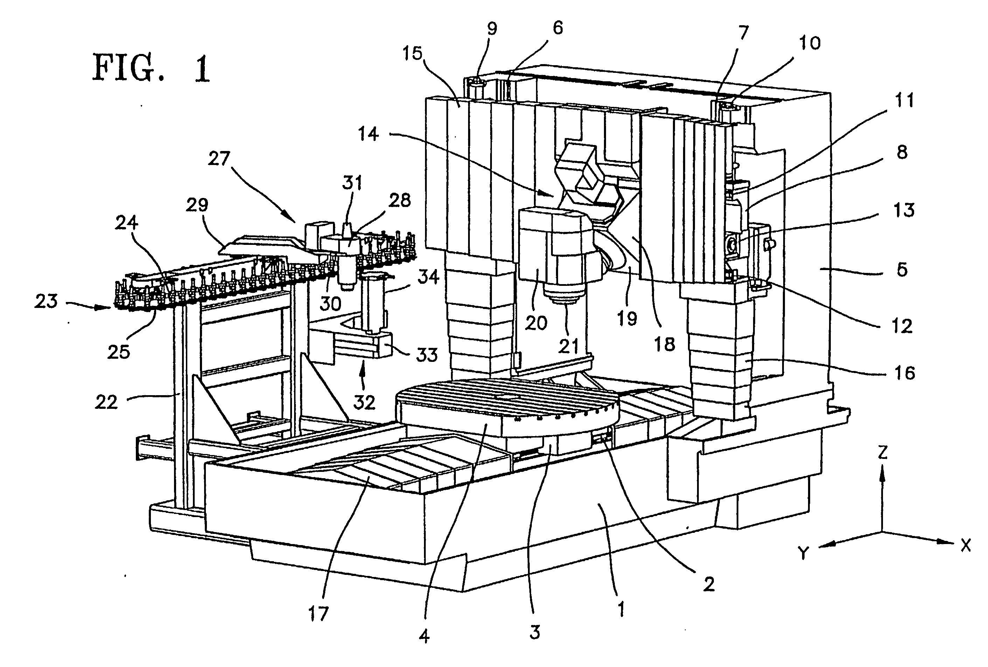

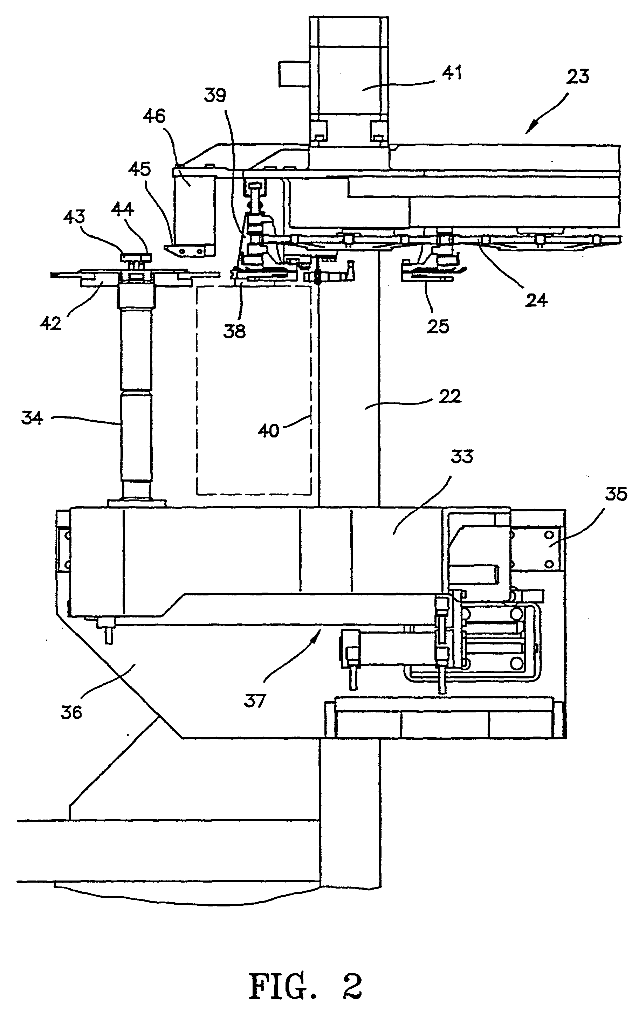

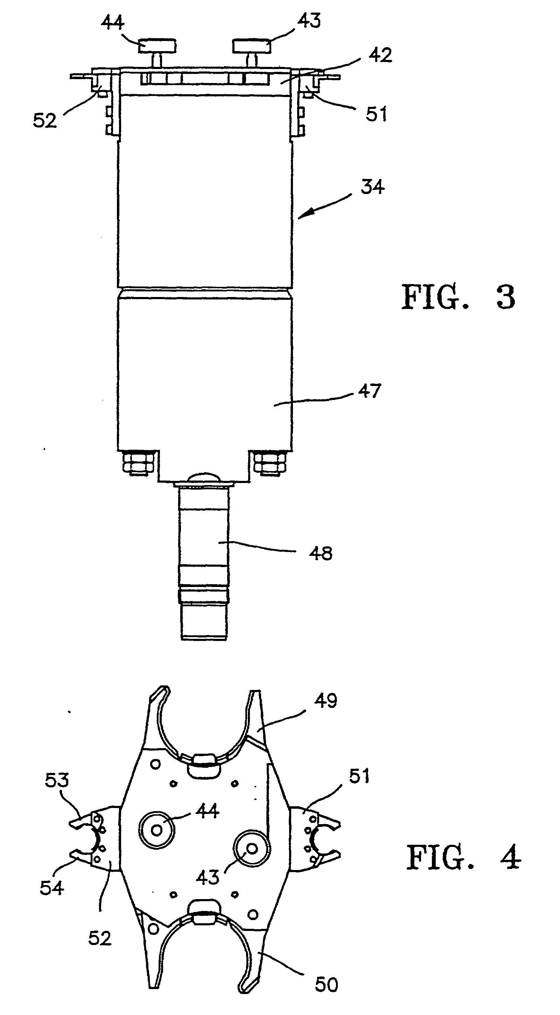

Die in Fig. 1 gezeigte Werkzeugmaschine enthält ein Maschinenbett 1 mit horizontalen Führungsschienen 2, auf denen ein Tischschlitten 3 mit einem um eine Vertikalachse verdrehbaren Werkstücktisch 4 in einer Y-Richtung motorisch verschiebbar angeordnet ist. An dem Maschinenbett 1 ist ein Portalständer 5 mit vertikalen Führungsschienen 6 und 7 angeordnet, an denen ein Querträger 8 über motorisch angetriebene Gewindespindeln 9 und 10 in einer Z-Richtung vertikal verschiebbar geführt ist. An der Vorderseite des Querträgers 8 sind horizontale Führungsschienen 11 und 12 zur Führung einer über eine motorisch angetriebene Gewindespindel 13 in einer X-Richtung horizontal verfahrbaren Bearbeitungseinheit 14 vorgesehen. Sowohl die Führungsschienen 11 und 12 für die Bearbeitungseinheit 14 als auch die Führungsschienen 6 und 7 für den Querträger 8 und die Führungsschienen 2 für den Tischschlitten 3 sind zum Schutz gegen Verschmutzung durch jeweils zwei verschiebbare Abdeckbleche 15, 16 und 17 abgedeckt.

Die am Querträger 8 horizontal verfahrbar geführte Bearbeitungseinheit 14 enthält ein Traggehäuse 18 mit einer gegenüber der Vertikalen um 45° geneigten, schräg nach unten weisenden Stirnwand 19, an der ein Schwenkfräskopf 20 um eine zur Stirnwand 19 senkrechte Schwenkachse verdrehbar montiert ist. In dem Schwenkfräskopf 20 ist eine unter 45° zur Schwenkachse angeordnete Bearbeitungsspindel 21 gelagert, die durch entsprechende Drehung des Schwenkfräskopfes 20 zwischen einer in Fig. 1 gezeigten vertikalen Bearbeitungsstellung und einer horizontalen Bearbeitungsstellung verschwenkbar ist.

Seitlich am Maschinenbett 1 ist ein als Kettenmagazin ausgeführtes Werkzeugmagazin 23 angeordnet, das ein Gestell 22 und eine an seiner Oberseite umlaufende, motorisch angetriebene Gliederkette 24 mit zangenförmigen Werkzeughaltern 25 enthält.

Auf der Oberseite des Gestells 22 ist ferner eine Vorrichtung 27 zur Halterung und Einwechslung einer Hochgeschwindigkeitsspindel 28 angeordnet. Die Vorrichtung 27 enthält einen auf einem Führungsarm 29 horizontal verfahrbaren Greiferarm 30, in dem die Hochgeschwindigkeitsspindel 28 mit einem nach oben ragenden Spannkonus 31 gehaltert ist. Durch horizontale Verschiebung des Greiferarms 30 kann die Hochgeschwindigkeitsspindel 28 in eine Wechselposition unter die in eine Übergabeposition verfahrene Bearbeitungsspindel 21 bewegt werden. Durch eine Vertikalbewegung der Bearbeitungseinheit 14 in der Z-Richtung kann dann die Hochgeschwindigkeitsspindel 28 mit ihrem Spannkegel 31 in die Bearbeitungsspindel 21 eingefahren und dort durch eine entsprechende Klemmeinrichtung fixiert werden.

Seitlich am Gestell 22 ist außerdem eine Werkzeugwechseleinrichtung 32 mit einem in der X-Richtung motorisch verschiebbaren, abgewinkelten Träger 33 angeordnet, an dem ein in den Fig. 2 bis 4 im einzelnen dargestellter Werkzeugwechsler 34 um eine Vertikalachse verdrehbar angeordnet ist.

Wie besonders aus Fig. 2 hervorgeht, ist der Träger 33 bei der gezeigten Ausführung an einer Schiene 35 geführt, die an einer am Gestell 22 seitlich angeordneten Halterung 36 befestigt ist. Die horizontale Verschiebung des Trägers 33 erfolgt durch einen Linearantrieb 37, der als hydraulischer, elektrischer oder pneumatischer Antrieb ausgeführt sein kann. An dem vorderen Ende des Trägers 33 ist der Werkzeugwechsler 34 angeordnet, der durch einen nicht dargestellten Antrieb um eine Vertikalachse verdrehbar ist. An der Oberseite des Gestells 22 ist die Gliederkette 24 mit den zangenförmigen Werkzeughaltern 25 angeordnet. Sie sind zur Halterung unterschiedlich großer Werkzeugaufnahmen 38 für die Werkzeuge der Bearbeitungsspindel 21 und die der Hochgeschwindigkeitsspindel 28 ausgebildet. In die mit einem vertikal nach oben ragenden Spannkegel 39 versehenen Werkzeugaufnahmen 38 sind Werkzeuge mit den durch die gestrichelte Linie 40 angedeuteten Maximalabmessungen einsetzbar. In den Werkzeughaltern 25 können aber auch Werkzeuge mit einem unmittelbar angeformten Spannkegel gehalten werden. Die Gliederkette 24 wird durch einen Stellmotor 41 über eine geeignete Getriebeanordnung oder ein Kettenrad angetrieben. Durch entsprechende Ansteuerung des Stellmotors 41 können so die gewünschten Werkzeuge entsprechend dem jeweiligen Arbeitsprogramm in eine vorgegebene Wechselstellung verfahren werden, in welcher der Werkzeugwechsler 34 mit seiner in den Fig. 3 und 4 genauer dargestellten Vierfach-Greiferanordnung 42 durch entsprechende Horizontalverschiebung des Träger 33 an dem Werkzeug bzw. seiner Werkzeugaufnahme 38 angreifen kann.

An der Oberseite der Vierfach-Greiferanordnung 42 sind zwei Betätigungsknöpfe 43 und 44 zur Entriegelung einer nicht im einzelnen dargestellten Greiferarretierung angeordnet. Die Betätigungsknöpfe 43 und 44 sind durch ein keilförmiges Betätigungselement 45 an der Unterseite eines am Gestell 22 befestigten Betätigungsarms 46 beim Einfahren des Werkzeugwechslers 34 in das Werkzeugmagazin 23 betätigbar.

Wie in Fig. 3 gezeigt, enthält der Werkzeugwechsler 34 eine Tragsäule 47 mit rechteckigem Querschnitt, auf deren Oberseite die Vierfach-Greiferanordnung 42 angeordnet ist. An der Unterseite der Tragsäule 47 ist ein Zapfen 48 vorgesehen, über den die Tragsäule 47 verdrehbar im Träger 33 gelagert ist. Die Vierfach-Greiferanordnung 42 enthält gemäß Fig. 4 zwei diametral gegenüberliegende Werkzeuggreifer 49 und 50, die zur Entnahme und Halterung der in die Bearbeitungsspindel 21 einwechselbaren Werkzeuge oder deren Werkzeugaufnahmen ausgebildet sind. Um 90° versetzt zu den Werkzeuggreifern 49 und 50 sind zwei ebenfalls diametral gegenüberliegende zusätzliche Werkzeuggreifer 51 und 52 angeordnet, die zur Entnahme und Halterung der in die Hochgeschwindigkeitsspindel 28 einwechselbaren Werkzeuge oder deren Werkzeugaufnahmen bestimmt sind. Da die Hochgeschwindigkeitsspindel 28 zur Aufnahme kleinerer Werkzeuge bzw. Werkzeugaufnahmen als die Bearbeitungsspindel konzipiert ist, sind auch die zusätzlichen Werkzeuggreifer 51 und 52 entsprechend kleiner dimensioniert.

Auf der Oberseite der Vierfach-Greiferanordnung 42 sind die beiden Betätigungsknöpfe 43 und 44 angeordnet, durch deren Niederdrücken die Arretierung der z.B. durch Federn nach innen vorgespannten Greiferarme 53 und 54 der Werkzeuggreifer zum Auswechseln der Werkzeuge gelöst wird.

Ein Werkzeugwechsel erfolgt bei der in Fig. 1 dargestellten Werkzeugmaschine wie folgt:

Zur Einwechslung von Werkzeugen in die Bearbeitungsspindel 21 wird das Werkzeugmagazin 23 entsprechend einem vorgegebenen Arbeitsprogramm derart verfahren, daß die gewünschte Werkzeughalterung 25 mit dem benötigten Werkzeug in eine vorgegebene Wechselposition gelangt. Dann wird der Träger 33 mit dem Werkzeugwechsler 34 aus der in Fig. 2 gezeigten Bereitschaftsstellung in Richtung des Werkzeugmagazins 23 verfahren, bis der zum Werkzeugmagazin gerichtete Werkzeuggreifer 49 in Eingriff mit der Werkzeugaufnahme 38 gelangt. Anschließend wird der Werkzeugwechsler 34 mit dem aus dem Werkzeugmagazin 23 entnommenen Werkzeug durch eine vom Werkzeugmagazin weg gerichtete Bewegung des Trägers 33 derart unter die in eine Übergabeposition verfahrene Bearbeitungsspindel 21 verschoben, daß der leere Werkzeuggreifer 50 das in der Bearbeitungsspindel 21 befindliche Werkzeug ergreifen kann. Daraufhin wird die Bearbeitungseinheit 14 nach dem Lösen einer an sich bekannten Werkzeugklemmung innerhalb der Bearbeitungsspindel 21 in Z-Richtung nach oben verfahren. Durch eine anschließende Drehung des Werkzeugwechlers 34 um 180° wird anschließend das neue Werkzeug unter die Bearbeitungsspindel gebracht. Diese wird dann wieder in Z-Richtung verfahren und die Werkzeugklemmung wird wieder aktiviert. Durch Verfahren des Trägers 33 kann dann das vorherige Werkzeug wieder im Werkzeugmagazin 23 abgelegt werden und der Werkzeugwechler 34 fährt durch entsprechende Verschiebung des Trägers 33 wieder in seine Bereitschaftsstellung zurück.

Die Einwechslung der Werkzeuge an der zuvor über die Vorrichtung 27 in die Bearbeitungsspindel 21 eingesetzten Hochgeschwindigkeitsspindel 28 erfolgt in entsprechender Weise, wobei zunächst der Werkzeugwechlser 34 um 90° verschwenkt wird, so daß die zusätzlichen Werkzeuggreifer 51 bzw. 52 zum Einsatz gelangen.

Die Erfindung ist nicht auf die im einzelnen beschriebene und in der Zeichnung dargestellte Ausführung beschränkt. So kann das Werkzeugmagazin mit der Werkzeugwechseleinrichtung auch an Werkzeugmaschinen mit einer anderen Bauweise eingesetzt werden. Außerdem können die unterschiedlichen Greifer für die Werkzeuge der Bearbeitungsspindel und die Werkzeuge des Zusatzaggregats in einer an die jeweilige Bauform der Werkzeugmaschine angepaßten unterschiedlichen Ausrichtung angeordnet sein. Anstelle des gesamten Werkzeugwechslers kann auch nur die Vierfach-Greiferanordnung verdrehbar ausgeführt sein.

## Patentansprüche

1. Werkzeugmaschine mit
einer Bearbeitungsspindel (21),
einer Vorrichtung (27) zur Einwechslung eines Zusatzaggregats (28) in die Bearbeitungsspindel (21),
einem Werkzeugmagazin (23) für die Bereitstellung mehrerer Werkzeuge und
einem Werkzeugwechsler (34) für den Werkzeugtransport zwischen dem Werkzeugmagazin (23) und einer Übergabeposition an der Bearbeitungsspindel (21),
**dadurch gekennzeichnet,**
**daß** der Werkzeugwechsler (34) eine Vierfach-Greiferanordnung (42) mit zwei diametral gegenüberliegenden Werkzeuggreifern (49, 50) für die Bearbeitungsspindel (21) und zwei um jeweils 90° dazu versetzten zusätzlichen Werkzeuggreifern (51, 52) für das Zusatzaggregat (28) enthält, und
**daß** die Werkzeuggreifer (49, 50) und die zusätzlichen Werkzeuggreifer (51, 52) zum Greifen unterschiedlich großer Werkzeugaufnahmen (38) ausgebildet sind.

2. Werkzeugmaschine nach Anspruch 1, **dadurch gekennzeichnet, daß** die Vierfach-Greiferanordnung (42) auf einem mittels Linearantrieb (37) an einem Gestell (22) des Werkzeugmagazins (23) horizontal verfahrbaren Träger (33) um eine Vertikalachse motorisch verdrehbar angeordnet ist.

3. Werkzeugmaschine nach Anspruch 2, **dadurch gekennzeichnet, daß** der Werkzeugwechsler (34) in dem Träger (33) motorisch verdrehbar gelagert ist.

4. Werkzeugmaschine nach einem der Ansprüche 1 bis 3, **dadurch gekennzeichnet, daß** das Zusatzaggregat (28) eine Hochgeschwindigkeitsspindel ist.

5. Werkzeugmaschine nach einem der Ansprüche 1 bis 4, **dadurch gekennzeichnet, daß** die Vorrichtung (27) zur Einwechslung des Zusatzaggregats (28) auf/an dem Kettenmagazin (23) angeordnet ist.

6. Werkzeugmaschine nach einem der Ansprüche 1 bis 5, **dadurch gekennzeichnet, daß** die Vorrichtung (27) einen auf einem Führungsarm (29) motorisch verfahrbaren Greiferarm (30) zur Halterung des Zusatzaggregats (28) enthält.

7. Werkzeugmaschine nach einem der Ansprüche 1 bis 6, **dadurch gekennzeichnet, daß** der Werkzeugwechsler (34) eine lösbare Greiferarretierung (43, 44) enthält.

## Claims

1. Machine tool comprising
a machining spindle (21),
a device (27) for inserting an auxiliary unit (28) into the machining spindle (21),
a tool magazine (23) for providing a multitude of tools, and
a tool changer (34) for moving the tools between the tool magazine (23) and an transfer position at the machining spindle (21), **characterised in that**
the tool changer (34) comprises a quadruple gripper arrangement (42) provided with two diametrically opposed tool grippers (49, 50) for the machining spindle (21), and with two additional tool grippers (51, 52) for the supplementary unit (28) respectively displaced by 90° thereto, and **in that**
the tool grippers (49, 50) and the additional tool grippers (51, 52) are formed for gripping tool holding fixtures (38) of different sizes.

2. Machine tool according to claim 1, **characterised in that** the quadruple gripper arrangement (42) is rotatable about a vertical axis by means of a motor and disposed on a support (33) which is horizontally shiftable on a frame (22) of the tool magazine (23) by means of a linear drive (37).

3. Machine tool according to claim 2, **characterised in that** the tool changer (34) is borne in the support (33) and rotatable by means of a motor.

4. Machine tool according to any one of claims 1 to 3, **characterised in that** the auxiliary unit (28) is a high speed spindle.

5. Machine tool according to any one of claims 1 to 4, **characterised in that** the device (27) for exchanging the supplementary unit (28) is disposed on/at the chain magazine (23).

6. Machine tool according to any one of claims 1 to 5, **characterised in that** the device (27) comprises a gripping arm (30), which is shiftable by means of a motor on a guiding arm (29), for holding the auxiliary unit (28).

7. Machine tool according to any one of claims 1 to 6, **characterised in that** the tool changer (34) comprises a releasable gripper catch (43, 44).

## Revendications

1. Machine-outil comportant
une broche d'usinage (21),
un dispositif (27) pour le changement d'un agrégat complémentaire (28) dans la broche d'usinage (21),
un magasin d'outils (23) pour la disponibilité de plusieurs outils et un changeur d'outils (34) pour le transport d'outils entre le magasin d'outils (23) et une position de transfert sur la broche d'usinage (21),
**caractérisée en ce que**
le changeur d'outils (34) comprend un mécanisme à quatre pinces (42) avec deux pinces d'outils (49, 50) diamétralement opposées pour la broche d'usinage (21) et deux pinces d'outils (51, 52) complémentaires décalées de 90 ° par rapport à celles-ci pour l'agrégat complémentaire (28), et
**en ce que** les pinces d'outils (49, 50) et les pinces d'outils (51, 52) complémentaires sont réalisées pour la saisie d'attachements d'outils (38) de tailles différentes.

2. Machine-outil selon la revendication 1, **caractérisée en ce que** le mécanisme à quatre pinces (42) est disposé sur un support (37) coulissant horizontalement contre un cadre (22) du magasin d'outils (23) au moyen d'un entraînement linéaire (33), de manière à effectuer une rotation commandée par un moteur autour d'un axe vertical.

3. Machine-outil selon la revendication 2, **caractérisée en ce que** le changeur d'outils (34) est logé dans le support (33) de manière à pourvoir effectuer une rotation commandée par un moteur.

4. Machine-outil selon l'une des revendications 1 à 3, **caractérisée en ce que** l'agrégat complémentaire (28) est une broche à haute vitesse.

5. Machine-outil selon l'une des revendications 1 à 4, **caractérisée en ce que** le dispositif (27) pour le changement d'un agrégat complémentaire (28) est disposé sur/contre le magasin à chaîne (23).

6. Machine-outil selon l'une des revendications 1 à 5, **caractérisée en ce que** le dispositif (27) comprend un bras de saisie (30) coulissant par entraînement motorisé sur un bras de guidage (29) pour le maintien de l'agrégat complémentaire (28).

7. Machine-outil selon l'une des revendications 1 à 6, **caractérisée en ce que** le changeur d'outils (34) comprend un dispositif de blocage de pince (43, 44) amovible.
